# EUROPÄISCHE PATENTANMELDUNG

(11) **EP 2 933 533 A1**
(43) Veröffentlichungstag der Anmeldung: **21.10.2015**
(21) Anmeldenummer: 14165139.8
(22) Anmeldetag: 17.04.2014
(51) Int. Cl.: F16H 57/038, F16H 57/02

(54) **Kegelradvorstufe eines Planetengetriebes**

(71) Anmelder: Siemens Aktiengesellschaft, 80333 München (DE)
(72) Erfinder: Kiesenbauer, Jens, 09322 Penig (DE); Liebig, Thomas, 01069 Dresden (DE); Schade, Robert, 04680 Colditz (DE)

(57) **Zusammenfassung**

Die Erfindung betrifft eine Kegelradvorstufe als Vorstufe eines Planetengetriebes. Die Kegelradvorstufe umfasst eine einseitig gelagerte Antriebswelle (21) mit einem Antriebs-Kegelrad (23), eine fliegend gelagerte Abtriebswelle (22) mit einem mit dem Antriebs-Kegelrad (23) in Zahneingriff stehenden Abtriebs-Kegelrad (24) und ein Getriebegehäuse (29), in welchem die beiden Wellen (21, 22) gelagert sind. Die Antriebswelle (21) weist an einem Wellenende eine Antriebsschnittstelle (27) zur Verbindung mit einem Antriebsmotor (4) aufweist und ist auf der von der Antriebsschnittstelle (27) abgewandten Seite des Antriebs-Kegelrads (23) in einem Lager (25) gelagert. Die Abtriebswelle (22) weist an ihrem von dem Abtriebs-Kegelrad (24) abgewandten Ende eine Abtriebsschnittstelle (28) zur Verbindung mit einer Planetenhauptstufe (2) auf.

## Beschreibung

Die vorliegende Erfindung betrifft eine Kegelradvorstufe eines Planetengetriebes.

Es ist bekannt, eine als Vorgelege einer Getriebehauptstufe dienende Kegelradstufe mit einer fliegenden Lagerung der Antriebswelle auszuführen, wobei die Lager der Antriebswelle an dem angetriebenen Wellenende der Antriebswelle, d.h. motorseitig, angeordnet sind. In der Firmenschrift "Die Gestaltung von Wälzlagerungen - Konstruktionsbeispiele aus dem Maschinen-, Fahrzeug- und Gerätebau" der Schaeffler Technologies GmbH & Co. KG, Schweinfurt, Publ.-Nr. WL 00 200/5 DA, Ausgabe Juli 2011, ist unter der Nr. 29 auf Seite 45 eine Kegelradvorstufe eines Stirnradgetriebes dargestellt.

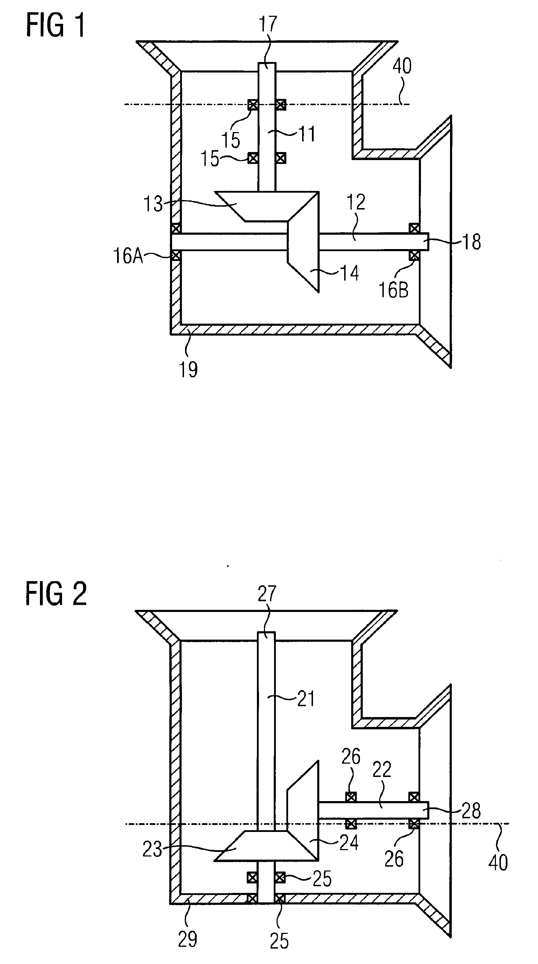

Eine schematische Darstellung einer solchen bekannten Kegelradstufe ist in Fig. 1 dargestellt. Der Bauraum, der von der Antriebswelle 11 und einem koaxial mit dem Wellenende 17 verbundenem Antriebsmotor (nicht dargestellt) eingenommen wird, ist relativ groß. Ist außerdem, wie in Fig. 1 dargestellt, die durch einen Motor angetriebene Antriebsachse 11 der Kegelradstufe aufrecht stehend angeordnet, z.B. um den horizontalen Bauraum des Antriebs, bestehend aus Motor und Getriebe, möglichst gering zu halten, muss zur Schmierung der Lager 15 der Antriebswelle 11 entweder auf eine Fettschmierung zurückgegriffen werden oder die Ölversorgung durch eine folgender Maßnahme sichergestellt werden: einerseits wird eine die Kosten erhöhende Druckschmierung vorgesehen oder der Ölstand wird so weit erhöht, dass auch das oberste Lager 15 der Antriebswelle 11 sicher im Ölbad liegt. Bedingt durch den Aufbau der Kegelradstufe muss in letzterem Fall das komplette Getriebegehäuse 19 mit Öl gefüllt werden, was den Wirkungsgrad des Getriebes durch Planschverluste senkt.

Der Erfindung liegt die Aufgabe zugrunde, eine verbesserte Kegelradstufe als Vorgelege von Planetengetrieben anzugeben.

Diese Aufgabe wird gelöst durch die Merkmale des Anspruchs 1.

Die erfindungsgemäße Kegelradvorstufe dient als Vorstufe eines Planetengetriebes. Die Kegelradvorstufe umfasst eine einseitig gelagerte Antriebswelle mit einem Antriebs-Kegelrad sowie eine fliegend gelagerte Abtriebswelle mit einem Abtriebs-Kegelrad, das mit dem Antriebs-Kegelrad kämmt. Die Kegelradvorstufe umfasst außerdem ein Getriebegehäuse, in welchem die beiden Wellen gelagert sind. Die Antriebswelle weist an einem Wellenende eine Antriebsschnittstelle zur Verbindung mit einem Antriebsmotor auf. Die Antriebswelle ist auf der von der Antriebsschnittstelle abgewandten Seite des Antriebs-Kegelrads in einem Lager gelagert. Die Abtriebswelle weist an ihrem von dem Abtriebs-Kegelrad abgewandten Ende eine Abtriebsschnittstelle zur Verbindung mit einer Planetenhauptstufe auf.

Der Begriff "Kegelrad" umfasst sowohl ein Kegelrad als auch ein Tellerrad. So ist es z.B. möglich, dass die Antriebswelle ein Kegelrad und die Abtriebswelle ein Tellerrad trägt, oder umgekehrt.

Ähnlich wie beim Stand der Technik erfolgt auch bei der vorliegenden Erfindung die Lagerung der Antriebswelle der Kegelradvorstufe fliegend; im Gegensatz zum Stand der Technik ist aber das Lager der Antriebswelle der Kegelradvorstufe auf die andere Seite des Zahneingriffs verlegt. Durch die Verlegung der Lagerung der Antriebswelle auf die von der Antriebsschnittstelle abgewandte Seite des Antriebs-Kegelrads kann der Motor wesentlich näher an das Getriebe herangerückt werden; dadurch wird der motorseitig axial benötigte Bauraum gegenüber herkömmlichen Planetengetriebe-Kegelradvorstufen wesentlich verringert.

Zusätzlich zu dem Vorteil bezüglich des verringerten Bauraums ist die Kegelradstufe sowohl an- wie auch abtriebsseitig jeweils mit einer Schnittstellenlösung versehen. Diese erlaubt am Antrieb die Adaption verschiedener Motoren mit nur einer Antriebswelle sowie am Abtrieb die Nutzung verschiedener Übersetzungen der nachfolgenden Getriebestufe mit ebenfalls nur einer Abtriebswelle. Diese beiden Schnittstellen senken die Teilevielfalt bei der Nutzung der Kegelradstufe innerhalb eines Getriebebaukastens erheblich und damit auch die Kosten der Antriebslösung.

Vorteilhafte Ausgestaltungen der Erfindung sind Gegenstand der Unteransprüche.

Gemäß einer bevorzugten Ausgestaltung umfasst das Lager der Antriebswelle zwei Wälzlager. Somit ist die Antriebswelle stabil gelagert. Es ist möglich, dass die Antriebswelle in einer Lagerbuchse mit zwei Lagern gelagert ist.

Das Lager der Antriebswelle kann als ein Doppelkegelrollenlager in X-Anordnung ausgebildet sein. Dadurch wird der Vorteil erreicht, dass durch den Druckwinkel des Kegelrollenlagers die Lage der virtuelle Lagerstelle auf der Welle näher an den Zahneingriff heranrückt. Dies verringert die Wellendeformation, was sich günstig auf die Geräusche und die Sicherheit der Kegelradverzahnung auswirkt.

Gemäß einer bevorzugten Ausgestaltung ist die Verzahnung des Antriebs-Kegelrads vertikal nach oben gewandt.

Gemäß einer bevorzugten Ausgestaltung ist die Kegelspitze der Verzahnung des Antriebs-Kegelrads in Richtung zu der Antriebsschnittstelle gewandt. Dadurch wird erreicht, dass die durch den Zahneingriff des Antriebs-Kegelrads in das Abtriebs-Kegelrad entstehende und auf die Antriebswelle wirkende Axialkraft in Richtung zu dem Lager der Antriebswelle gerichtet ist. Somit kann diese Axialkraft in der in Bezug auf das Antriebs-Kegelrad gegenüber der Antriebsschnittstelle angeordneten Lagerung der Antriebswelle aufgefangen werden.

Gemäß einer bevorzugten Ausgestaltung ist die Antriebswelle im Betrieb vertikal angeordnet und die Abtriebswelle im Betrieb waagrecht angeordnet. Besonders vorteilhaft ist es in diesem Fall, wenn die Antriebsschnittstelle vertikal nach oben gerichtet ist, d.h. vertikal über dem Antriebs-Kegelrad liegt. Dadurch liegt das Lager der Antriebswelle bei aufrecht stehendem Motor vertikal unter dem Antriebs-Kegelrad und somit im Ölbad, die Schmierung ist also bereits für den normalen Ölstand des Gesamtgetriebes sichergestellt. Dies senkt die Verluste des Getriebes und erhöht so die Wirtschaftlichkeit des Antriebs. Nur bei einer Anordnung des Motors nach unten würde das Problem der Schmiermittelversorgung der Antriebswellenlagerung wiederum entstehen; diese Bauform ist jedoch für den praktischen Einsatz nahezu irrelevant.

Gemäß einer bevorzugten Ausgestaltung ist das Getriebegehäuse bei vertikal angeordneter Antriebswelle im Betrieb der Kegelradvorstufe bis zu Lagern der waagrecht angeordneten Abtriebswelle mit Schmierstoff gefüllt. Durch den im Vergleich mit bisher bekannten Kegelradvorstufen stark verringerten Öl-stand in der Kegelradvorstufe werden die Planschverluste reduziert und der Getriebewirkungsgrad erhöht.

Gemäß einer bevorzugten Ausgestaltung trägt die Antriebswelle auf der von dem Antriebs-Kegelrad abgewandte Seite des Lagers mindestens ein Anbauteil, insbesondere eines oder mehrere folgender Anbauteile: eine Pumpe, eine Rücklaufsperre, einen Lüfter, eine Bremse, einen Geber zur Positionsbestimmung der Antriebswelle. Dadurch wird das freie Wellenende, das die Antriebswelle der erfindungsgemäßen Kegelradvorstufe besitzt, zur Montage von Anbauteilen, d.h. zusätzlicher Bauelemente, genutzt; dabei kann die durch die Antriebswelle bereitgestellte Rotationsenergie zum Antrieb dieser Anbauteile genutzt werden. Da es sich um die Eingangswelle des Getriebes handelt, an welcher die höchsten Drehzahlen und das geringste Drehmoment anliegen, können die Anbauteile entsprechend kleiner dimensioniert werden, als dies an Zwischenwellen möglich wäre.

Gemäß einer bevorzugten Ausgestaltung ist das Anbauteil außerhalb des Getriebegehäuses angeordnet. Dadurch können auch Anbauteile mit relativ großem Bauraum montiert werden bzw. Anbauteile, die mit der Umgebung in Kontakt kommen müssen, wie z.B. Lüfter.

Es ist vorteilhaft, ein Planetengetriebe umfassend eine Planetenhauptstufe mit einer erfindungsgemäßen Kegelradvorstufe bzw. einer Kegelradvorstufe gemäß einer der oben beschriebenen bevorzugten Ausgestaltungen auszustatten, wobei die Planetenhauptstufe über die Abtriebsschnittstelle mit der Kegelradvorstufe gekoppelt ist.

Es ist vorteilhaft, einen Getriebemotor, umfassend einen Motor und ein Planetengetriebe, mit einem Planetengetriebe, wie oben beschrieben, auszustatten, wobei der Motor über die Antriebsschnittstelle mit der Kegelradvorstufe gekoppelt ist.

Gemäß einer bevorzugten Ausgestaltung des Getriebemotors ist eine Rotorwelle des Motors durch ein Kupplungsstück mit dem vertikal oberen Ende der Antriebswelle der Kegelradvorstufe verbunden.

Es ist vorteilhaft, zum Betreiben der Kegelradvorstufe wie oben beschrieben das Getriebegehäuse bei betriebener Kegelradvorstufe bis zu Lagern der waagrechten Abtriebswelle mit Schmierstoff zu füllen. Durch den im Vergleich mit bisher bekannten Kegelradvorstufen stark verringerten Ölstand in der Kegelradvorstufe werden die Planschverluste reduziert und der Getriebewirkungsgrad erhöht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- Fig. 1: schematisch in einem Schnitt eine bekannte Kegelradvorstufe eines Planetengetriebes,
- Fig. 2: schematisch in einem Schnitt eine bevorzugte Weiterbildung einer Kegelradvorstufe eines Planetengetriebes,
- Fig. 3: schematisch in einem Schnitt eine Kegelradvorstufe mit einem angebauten Lüfter,
- Fig. 4: schematisch ein Planetengetriebe mit Kegelradvorstufe und Planetenhauptstufe,
- Fig. 5: schematisch einen Getriebemotor, und
- Fig. 6: einen Schnitt durch eine Antriebsschnittstelle.

Fig. 1 zeigt eine Kegelradvorstufe eines Planetengetriebes, wie sie aus dem Stand der Technik bekannt ist. Die Kegelradvorstufe weist eine fliegend gelagerte Antriebswelle 11 mit einem Antriebs-Kegelrad 13, eine Abtriebswelle 12 mit einem mit dem Antriebs-Kegelrad 13 in Zahneingriff stehenden Abtriebs-Kegelrad 14 und ein Getriebegehäuse 19 auf, in welchem die beiden Wellen 11, 12 gelagert sind. Dabei ist die Kegelradvorstufe während ihres Betriebs so angeordnet, dass die Antriebswelle 11 vertikal und die Abtriebswelle 12 horizontal angeordnet ist.

Die Antriebswelle 11 wird an ihrem vertikal oberen Ende 17 mit einem Antriebsmotor verbunden. Darunter sind die Lager 15 der Antriebswelle 11 angeordnet, und vertikal unterhalb der Lager 15 ist das Antriebs-Kegelrad 13 auf Antriebswelle 11 angeordnet. Dabei weist die Kegelspitze der Verzahnung des Antriebs-Kegelrads 13 vertikal nach unten. Die Abtriebswelle 12 ist an beiden Enden in Lagern 16A, 16B gelagert, d.h. beiderseits des Abtriebs-Kegelrads 14. An ihrem einen Ende 18 wird die Abtriebswelle 12 mit einem Planetengetriebe verbunden.

Um eine ausreichende Schmierung aller Schmierstellen des Vorgeleges zu gewährleisten, d.h. auch der am motorseitigen Ende der Antriebswelle 11 angeordneten Lager 15 der der Antriebswelle, muss das Schmierölniveau 40 im Getriebegehäuse 19 bis zum vertikal obersten Lager 15 reichen.

Fig. 2 zeigt eine Kegelradvorstufe eines Planetengetriebes. Die Kegelradvorstufe weist eine fliegend gelagerte Antriebswelle 21 mit einem Antriebs-Kegelrad 23, eine Abtriebswelle 22 mit einem mit dem Antriebs-Kegelrad 23 in Zahneingriff stehenden Abtriebs-Kegelrad 24 und ein Getriebegehäuse 29 auf, in welchem die beiden Wellen 21, 22 gelagert sind. Dabei ist die Kegelradvorstufe während ihres Betriebs so angeordnet, dass die Antriebswelle 21 vertikal und die Abtriebswelle 22 horizontal angeordnet ist.

Die Antriebswelle 21 weist an ihrem vertikal oberen Ende 27 eine Antriebsschnittstelle 27 auf, über die sie mit einem Antriebsmotor verbunden werden kann. Dabei weist der Antriebsmotor eine vertikale Rotorwellenlage auf. Darunter ist das Antriebs-Kegelrad 23 auf der Antriebswelle 21 angeordnet. Unterhalb des Antriebs-Kegelrads 23 sind die Lager 25 der Antriebswelle 21 angeordnet. Dabei weist die Kegelspitze der Verzahnung des Antriebs-Kegelrads 23 vertikal nach oben. An ihrem von dem Abtriebs-Kegelrad 24 abgewandten Ende weist die Abtriebswelle 22 eine Abtriebsschnittstelle 28 zur Verbindung mit einem Planetengetriebe auf. Die Abtriebswelle 22 ist in zwischen dem Abtriebs-Kegelrad 24 und der Abtriebsschnittstelle 28 angeordneten Lagern 26 fliegend gelagert. Die öldichte Abdichtung der Lagerstelle 25 am vertikal unteren Ende der Antriebswelle kann mithilfe von Dichtungen erfolgen, wie sie dem Fachmann ausreichend bekannt sind.

Um eine ausreichende Schmierung aller Schmierstellen des Vorgeleges zu gewährleisten, ist es bei der erfindungsgemäßen Kegelradvorstufe ausreichend, wenn das Schmierölniveau 40 im Getriebegehäuse 29 bis an den vertikal unteren Rand der Lager 26 der waagrecht liegenden Abtriebswelle 22 reicht. Dieses gegenüber der in Fig. 1 dargestellten Situation niedrigere Ölniveau 40 ist möglich durch die erfindungsgemäße Verlegung der Lager 25 der Antriebswelle 21 an eine Position vertikal unterhalb des Antriebs-Kegelrads 23.

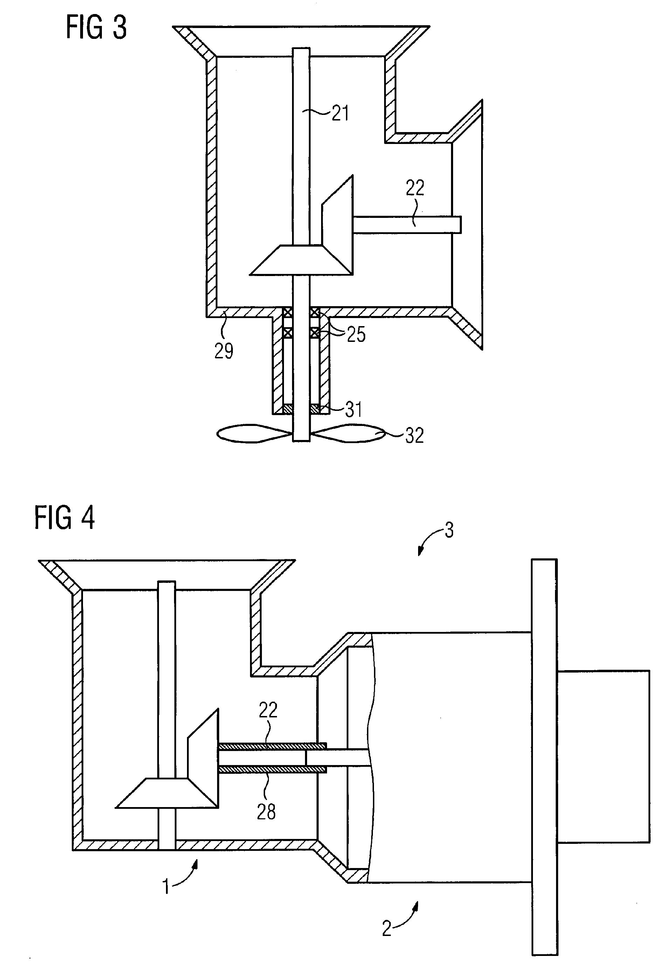

Fig. 3 zeigt eine bevorzugte Weiterbildung einer erfindungsgemäßen Kegelradvorstufe eines Planetengetriebes. Dabei ist an dem der Antriebsschnittstelle 27 gegenüberliegenden Ende der Antriebswelle 21 diese über die Lager 25 hinaus soweit vertikal nach unten verlängert, dass genügend Montageraum geschaffen wird, um innerhalb des Getriebegehäuses 29 eine Rücklaufsperre 31 sowie außerhalb des Getriebegehäuses 29 ein Lüfterrad 32 auf der Antriebswelle 21 anzuordnen. Die

Fig. 4 zeigt ein Planetengetriebe 3, umfassend eine Planetenhauptstufe 2 und eine Kegelradvorstufe 1 nach einem der vorhergehenden Ansprüche. Dabei ist die Planetenhauptstufe 2 über die Abtriebsschnittstelle 28 mit der Kegelradvorstufe 1 gekoppelt. Die Planetenhauptstufe 2 kann eine oder mehrere koaxial gelagerte Planetenstufen aufweisen, die in einem eigenen, vorzugsweise zylindrischen Gehäuse gelagert sind. Die Abtriebswelle 22 der Kegelradvorstufe ist als eine Hohlwelle ausgebildet, an deren planetenseitigen Ende eine Innenverzahnung angebracht ist. Die Planetenhauptstufe 2 weist eine Eingangswelle mit einer korrespondierenden Außenverzahnung auf.

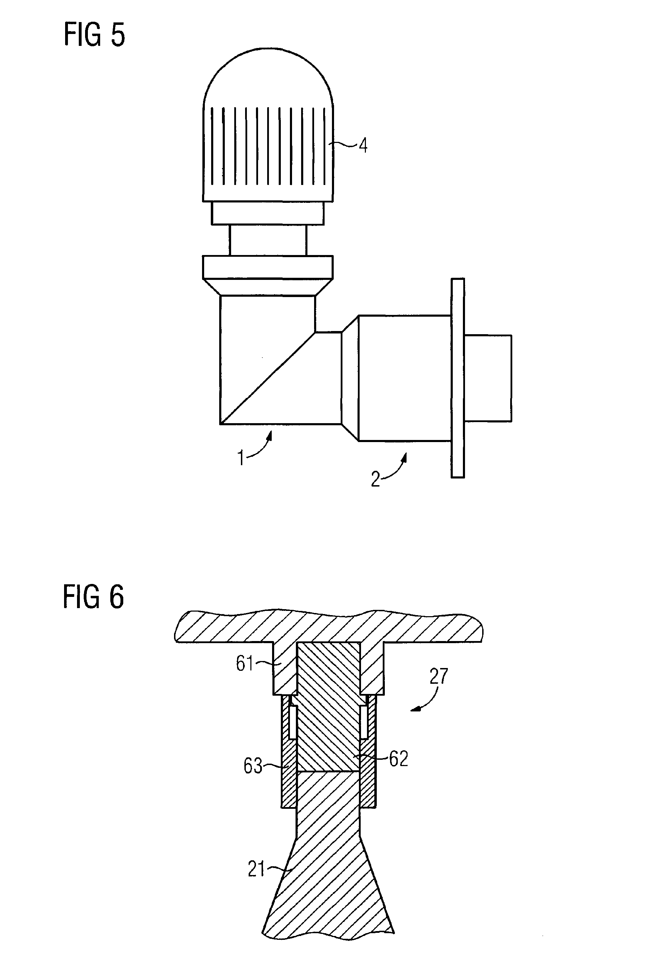

Fig. 5 zeigt einen Getriebemotor, umfassend einen Motor 4, eine Kegelradvorstufe 1 und eine Planetenhauptstufe 2. Dabei ist der Motor 4 über eine Antriebsschnittstelle mit der Kegelradvorstufe 1 gekoppelt. Die Antriebsschnittstelle stellt, wie in Fig. 6 dargestellt, eine drehfeste Verbindung zwischen einer Rotorwelle 61 des Motors 4 und der Antriebswelle 21 der Kegelradvorstufe 1 her. Dabei ist die Antriebswelle 21 als eine außenverzahnte Vollwelle und die Rotorwelle 61 als eine innenverzahnte Hohlwelle ausgebildet. An die Antriebswelle 21 wird stirnseitig ein außenverzahnter Bolzen 62 angesetzt und durch ein übergeschobenes innenverzahntes hülsenförmiges Kupplungsstück 63 drehfest mit der Antriebswelle 21 verbunden. Der Bolzen 62 wiederum greift mit seiner Außenverzahnung in die Innenverzahnung der Motorhohlwelle 61. Durch verschieden dimensionierte Bolzen 62 ist es einfach möglich, drehfeste Verbindungen zwischen der Kegelradvorstufe und Motoren verschiedenen Typs herzustellen.

Alternativ kann auch ein marktüblicher Wellenzapfen mit einer Passfedernut eingesetzt werden, wie bei IEC-Motoren üblich. In diesem Fall muss lediglich eine andere Form für das Kupplungsstück 63 vorgesehen werden. Diese weist dann motorseitig eine Passfederverbindung auf und abtriebsseitig wiederum eine Innenverzahnung.

## Patentansprüche

1. Kegelradvorstufe als Vorstufe eines Planetengetriebes (3), umfassend eine einseitig gelagerte Antriebswelle (21) mit einem Antriebs-Kegelrad (23), eine fliegend gelagerte Abtriebswelle (22) mit einem mit dem Antriebs-Kegelrad (23) in Zahneingriff stehenden Abtriebs-Kegelrad (24) und ein Getriebegehäuse (29), in welchem die beiden Wellen (21, 22) gelagert sind,
- wobei die Antriebswelle (21) an einem Wellenende eine Antriebsschnittstelle (27) zur Verbindung mit einem Antriebsmotor (4) aufweist und auf der von der Antriebsschnittstelle (27) abgewandten Seite des Antriebs-Kegelrads (23) in einem Lager (25) gelagert ist, und
- wobei die Abtriebswelle (22) an ihrem von dem Abtriebs-Kegelrad (24) abgewandten Ende eine Abtriebsschnittstelle (28) zur Verbindung mit einer Planetenhauptstufe (2) aufweist.

2. Kegelradvorstufe nach Anspruch 1, wobei das Lager (25) der Antriebswelle (21) zwei Wälzlager umfasst.

3. Kegelradvorstufe nach Anspruch 1 oder 2, wobei die Kegelspitze der Verzahnung des Antriebs-Kegelrads (23) zu der Antriebsschnittstelle (27) gewandt ist.

4. Kegelradvorstufe nach einem vorhergehenden Anspruch, wobei die Antriebswelle (21) im Betrieb vertikal angeordnet ist, wobei die Antriebsschnittstelle (27) vertikal nach oben gerichtet ist, und die Abtriebswelle (22) im Betrieb waagrecht angeordnet ist.

5. Kegelradvorstufe nach Anspruch 4, wobei das Getriebegehäuse (29) im Betrieb der Kegelradvorstufe bis zu Lagern (26) der waagrecht angeordneten Abtriebswelle (22) mit Schmierstoff (40) gefüllt ist.

6. Kegelradvorstufe nach einem vorhergehenden Ansprüche, wobei die Antriebswelle (21) auf der von dem Antriebs-Kegelrad (23) abgewandte Seite des Lagers (25) mindestens ein Anbauteil trägt, insbesondere eines oder mehrere folgender Anbauteile: eine Pumpe, eine Rücklaufsperre (31), einen Lüfter (32), eine Bremse, einen Geber zur Positionsbestimmung der Antriebswelle (21).

7. Kegelradvorstufe nach Anspruch 6, wobei das Anbauteil außerhalb des Getriebegehäuses (29) angeordnet ist.

8. Planetengetriebe (3), umfassend eine Kegelradvorstufe (1) nach einem der vorhergehenden Ansprüche und eine Planetenhauptstufe (2), wobei die Planetenhauptstufe (2) über die Abtriebsschnittstelle (28) mit der Kegelradvorstufe (1) gekoppelt ist.

9. Getriebemotor, umfassend einen Motor (4) und ein Planetengetriebe (3) nach Anspruch 8, wobei der Motor (4) über die Antriebsschnittstelle (27) mit der Kegelradvorstufe (1) gekoppelt ist.

10. Getriebemotor nach Anspruch 9, wobei eine Rotorwelle (61) des Motors (4) durch ein Kupplungsstück (63) mit dem vertikal oberen Ende der Antriebswelle (21) der Kegelradvorstufe (1) verbunden ist.

11. Verfahren zum Betreiben der Kegelradvorstufe nach einem der Ansprüche 1 bis 7, wobei das Getriebegehäuse (29) bei betriebener Kegelradvorstufe bis zu Lagern (26) der waagrecht orientierten Abtriebswelle (22) mit Schmierstoff (40) gefüllt wird.
